# EUROPEAN PATENT SPECIFICATION

(11) **EP 3 723 060 B1**
(45) Date of publication and mention of the grant of the patent: **13.09.2023**
(21) Application number: 20169097.1
(22) Date of filing: 09.04.2020
(51) Int. Cl.: G08C 17/02

(54) **SMART SYSTEM FOR HOUSEHOLD DEVICES**
INTELLIGENTES SYSTEM FÜR HAUSHALTSGERÄTE
SYSTÈME INTELLIGENT POUR DISPOSITIFS MÉNAGERS

(30) Priority: 10.04.2019 HK 19122091
(43) Date of publication of application: 14.10.2020
(73) Proprietor: The Hong Kong and China Gas Company Limited, North Point (HK)
(72) Inventor: LEE, Ho Leung, North Point (HK)
(74) Representative: Marks & Clerk LLP

(56) References cited:
- CN-A- 106 647 469
- CN-U- 208 334 937
- CN-U- 208 424 405
- US-A1- 2003 084 047

## Description

The present invention relates to a smart system for use with household devices, for example particularly, but not exclusively, household kitchen devices.

### BACKGROUND OF THE INVENTION

Conventional manual control of devices is an inconvenient way for physically disabled, elderly and young children. Remote control of device comes into play. Living in an age where appliances are connected to the internet, cutlery is Bluetooth enabled, integrated management of these appliances and cutleries becomes paramount.

A useful manager is prerequisite in a smart home with all the smart gadgets ready to serve. It would be overwhelming if different devices require separate controls. To many, non-smart devices may be more manageable than to struggle amongst various applications. Full integration brings about true convenience to users of all ages and capacities. However, this may involve complex set-up that is space consuming and difficult to maintain without in-depth knowledge in specific areas that are not easily apprehensible by many who are involved in the day-to-day use of the devices.

The invention seeks to eliminate or at least to mitigate such shortcomings by providing a device useful in mastering various devices in a kitchen environment, thereby achieving fully integrated control.

See also publication US2003/084047.

### SUMMARY OF THE INVENTION

According to the invention there is provided a control system according to claims 1 to 15.

### BRIEF DESCRIPTION OF DRAWINGS

The invention will now be more particularly described, by way of example only, with reference to the accompanying drawings, in which:
Figure 1 is a graphical illustration of an embodiment of a control system in accordance with the invention;
Figure 2 is a graphical illustration of a device in the form of a cooking pot; and
Figure 3 is a graphical illustration of an example utilizing the system in Figure 1.

### DETAILED DESCRIPTION OF PREFERRED EMBODIMENT

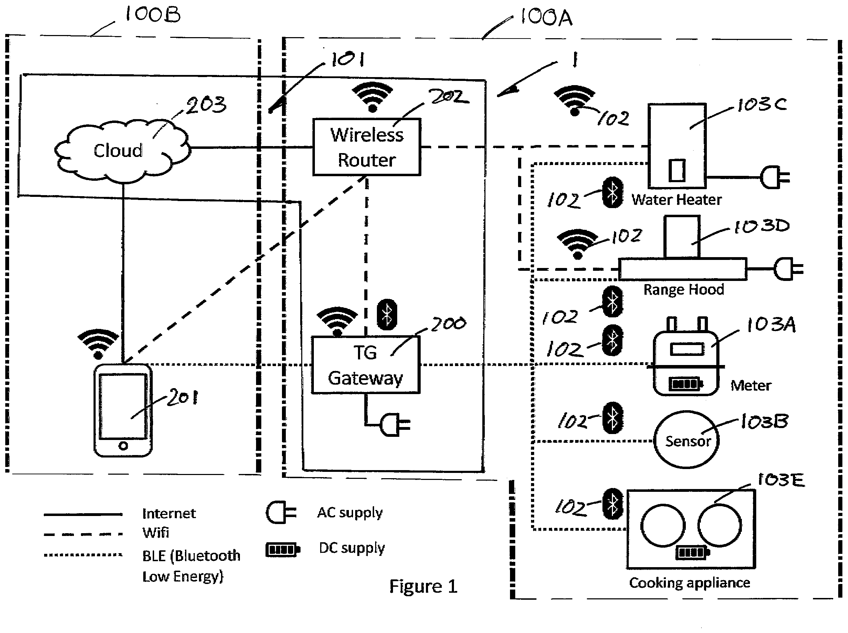

Referring to Figure 1 of the drawings, there is shown a control system 1 for use in a smart kitchen in accordance of the invention. The control system 1 is useful in providing true integration of smart devices 103A to 103E, or 103 collectively, by offering simple control over all of the smart devices 103 connected to the control system 1.

The control system 1 includes a master module 101 in wireless communication with at least one slave module 102. The master module 101 is a wireless integration of an internal network 100A and an external network 100B. The master module 101 includes a cloud 203 at a remote location, and a wireless router 202 and a gateway 200 in wireless communication therewith and located in premises that include the kitchen. In the example as shown in Figure 1, the cloud 203 is connected to the wireless router 202 through the internet, while the gateway 200 is connected to the same wireless router 202 by way of Wi-Fi to form the internal network 100A. The external network 100B includes at least the cloud 203 and/or a computing device 201, which is conveniently a mobile phone in the hands of a user.

The gateway 200 connects the cloud 203 to the slave module 102 and repeats any command from the cloud 203 for the slave module 102. The gateway 200 is in wireless communication, preferably Bluetooth Low Energy (BLE), with a number of said slave modules 102. As shown in Figure 1, alternative Wi-Fi connection is made available in addition, or as an alternative, with regard to the connection between the gateway 200 and the slave modules 102 for the smart devices 103C and 103D that are connected to an AC (alternating current) power supply. The use of Wi-Fi connection is preferred as it covers a relatively long range, though it is somewhat power consuming. Bluetooth Low Energy (BLE) communication is preferred for the other smart devices 103A, 103B and 103E that are battery-operated to avoid frequent replacement of battery.

In the embodiment as shown in Figure 1, there are five smart devices 103A to 103E that are associated, and in particular in-built, with respective slave modules 102, all of which are in communication with the same master module 101. By incorporating the slave modules 102, the smart devices 103 are sometimes hereinafter referred to as slave devices.

The master module 101 has control over the slave modules 102 through BLE or Wi-Fi for collecting information from the slave modules 102 and to handle commands from the computing device 201 for execution by the slave modules 102. Part of the master module 101 and the slave modules 102 are in physical proximity and as such BLE and Wi-Fi are both workable wireless communications between them.

All of the slave modules 102 are physically the same with identical or similar physical configuration. However, at least some of them are programmed differently so as to gather different types of information specific to the individual devices 103, with which they are associated. The information retrieved by or from the slave modules 102 is sent to the master module 101. More specifically, such information is sent to the cloud 203 for storing, processing and for formulating instructions based on commands provided by the user through the computing device 201. The information may go through the router 202 by way of Wi-Fi and then exported to the cloud 203. An alternative route may be through the gateway 200 by way of BLE communication. The cloud 203 is not directly connected to the gateway 200 but through the router 202.

In this specific embodiment, the wireless router 202, the gateway 200 and in particular the slave devices 103A to 103E are situated in the kitchen, within predetermined parameters, e.g. GPS coordinates, that define the location of the kitchen. As for the cloud 203, it is provided in a location remote from the kitchen, beyond the predetermined parameters. As such, communication between the cloud 203 and the router 202 would be by way of the internet. The router 202 and the gateway 200 together with the slave modules 102 constitute the internal network 100A, that being a first network. The cloud 203 forms part of the external network 100B, that being a second network, connected to the internal network 100A through the router 202.

The location of the mobile device 201 is often changing. The mobile device 201 may be connected directly to the router 202 and/or the gateway 200, forming part of the internal network 100A when it is located within the predetermined parameters. The connection of the mobile device 201 to the router 202 and the gateway 200 is by way of Wi-Fi and BLE respectively. When the mobile device 201 is located beyond or outside the predetermined parameters, its connection to the control system 1 would be through the cloud 203 in the external network 100B. Commands provided by the user through the mobile device 201 are sent to the cloud 203 for interpretation and storage as well as formulation of instructions that enters the internal network 100A via the router 202.

The location of the mobile device 201 is monitored by the control system 1 under the cooperative effort of the gateway 200, the router 202 and the cloud 203 by way of, for example, GPS. Once the mobile device 201 exits the predetermined parameters, a warning signal will be sent to the mobile device 201, with or without monitoring of the status of the various slave devices 103. The distance of the mobile device 201 relative to at least one of the gateway 200 and router 202 is measured or at least monitored and is useful in activating an alarm means when the distance exceeds a threshold value. In more detail, a monitoring means is provided at or within any one of the mobile device 201, the gateway 200 and the router 202 to monitor the distance or location of the mobile device 201. It may make use of the GPS system to pinpoint the location of the mobile device 201 and calculate the distance. The alarm means may also be provided at the mobile device 201 to provide the alarm signal if the distance, or the location of the mobile device 201 is at a distance, which exceeds a threshold value. In a more sophisticated setup, the status of the slave devices 103 will be taken into consideration before a warning signal is set to the mobile device 201.

The mobile computing device such as smart phone 201 is connected to the router 202, and this allows the smart phone to communicate by Wi-Fi. The gateway 200 may be connected to the same router 202 for Wi-Fi communication with the smart phone 201. In a more sophisticated system, cloud 203 for cloud computing may be utilized and in connection with the smart phone 201 for two-way communication. Information gathered by the smart phone 201 may be stored in the cloud 203, such that it is readily retrievable by the or another smart phone 201. The smart phone 201 and the router 202 are connected to the cloud 203 via the Internet. The information is subsequently exported from the first, internal network 100A to the second, external network 100B through the master module 101.

The second, external network 100B includes at least one external computing device or mobile phone 201, with which the master module 101 is configured for communication. The computing device 201 may analyze the information collected by the slave modules 102 from the respective smart devices 103 and then formulate one or more instructions based on the collected information.

In a preferred embodiment, the information collected by a slave module 102 is sent to the master module 101, more specifically the cloud 203 for analysis and instruction formulation. The smart phone 201 acts as a monitor and an information display. The slave module 102 may be monitored via the smart phone 201. Alerts and reminder messages may be issued by the cloud 203 to the smart phone 201. Commands may be given by a user using the smart phone 201 to the master module 101 for translating into machine readable instructions for the slave module 102. As mentioned above, the smart phone 201 may provide instructions via the cloud 203 or it may exercise direct control over the slave devices 103 via the router 202 to the gateway 200 using Wi-Fi or by way of direct communication with the gateway 200.

Information provided to the cloud 203 may be retrievable by the mobile device 201. Commands may be provided by the smart phone 201 for formulation of instructions by the cloud 203, which are then sent through the router 202 and the gateway 200 to the same or a different slave module 102 and the associated smart device 103 for execution.

Information retrieved by the slave modules 102 may be communicated directly to the router 202 by Wi-Fi for those slave devices 103C and 103D that are powered by AC source. Information retrieved by the slave modules 102 of the slave devices 103A, 103B and 103E, which are DC powered, is sent to the gateway 200 by way of BLE communication which is then sent to the smart phone 201 either by way of BLE communication or through the router 202 by way of Wi-Fi if the smart phone 201 is within the predetermined parameters or to the cloud 203 when the smart phone 201 is outside the predetermined parameters. One way of determining whether the smart phone 201 is within or outside the predetermined parameters is to monitor the separation between the smart phone 201 and the router 202 or the gateway 200. The communication between the cloud 203 and the gateway 200 is not direct but via the router 202 making use of Wi-Fi and internet communications.

The gateway 200, in substitution of or in co-operation with the cloud 203, may analyze information from the slave modules 102 to formulate suitable instructions or actions. The involvement of the gateway 200 is particularly relevant where there is a need of instant information collection, analysis and response and/or feedback. The instant response or feedback may or may not involve the cloud 203 or the computing device 201 and/or the user. An example would be the collection of temperature information by a slave module 102, which indicates that the associated device 103E is overheating and requires instant response to turn off the device 103E as a safety measure. The gateway 200 runs on AC power to ensure continuous operation and in particular communication with all of the slave modules 102. A backup battery or capacitor may be installed to maintain certain essential basic functions in case of power interruption.

In a preferred embodiment of the invention, electrical connection of the gateway 200 is monitored by the cloud 203. Any disconnection would trigger an alarm being sent from the cloud 203 to the user via the mobile device 201.

It is possible for the user to specify a specific period of time during which any one of the slave devices 103 is to perform a specific function. A timer or timing circuit is required for count down and in general time keeping i.e. keeping a time when the relevant slave device 103 is to perform a specific function. The timer may be integrated with the slave device 103 or form part of the associated slave module 102. It is also possible for the timer to be provided with the gateway 200 such that the countdown is performed by the gateway 200. However in case of disconnection from the power source, the gateway 200 may fail to send instructions for terminating the specific function to the slave module 102 or the slave device 103. The timer function may also be provided by the cloud 203, but there is a possibility that an instruction, for example, to switch off the slave device 103 may fail to get through due to disconnection of the gateway 200 from the power source. For avoidance of avoid accident, the timer is best provided with the slave module 102 or the slave device 103.

The invention is now further described by way of example only. In Figure 1, the five smart devices 103 comprise a gas meter 103A, a sensor 103B, a water heater 103C, a range hood 103D and a cooking appliance 103E.

The gas meter 103A measures the quantity of gas consumed in a specific area such as a domestic premises. The slave module 102 associated with the gas meter 103A collects information on the quantity of gas used, i.e. gas meter reading, and sends it via the gateway 200 and the router 202 to the cloud 203 for bill calculation. Such information may also be sent to the external computing device 201 for display. The cloud 203 may subsequently send the billing information to the external computing device 201 in the form of a periodic report or a reminder for payment. It is also possible for the cloud 203 to send the billing information to the gas meter 103A, such that the billing information is readable through the gas meter 103A. Other information such as the battery status and internal valve information may also be collected from the slave module 102. The cloud 203 may send a reminder to the user via the external computing device 201. The cloud 203 or the external computing device 201 may also send a command to turn on/off the internal valve of the gas meter 103A.

The sensor 103B may be useful in sensing the temperature, motion, gas content and/or particulates content in the air of a specific area. The slave module 102 associated with the sensor 103B collects information in relation to the temperature, motion or amount of gas in the area and sends it through the gateway 200 and the router 202 to the cloud 203 or the external computing device 201 for monitoring. Such monitoring helps to ensure the comfort and safety of the relevant area. Instructions formulated based on the information collected from the sensor 103B can be sent to the slave module 102 of a different device, such as a ventilation device for ventilation. Analysis of the collected information may be accomplished by the gateway 200 and/or preferably the cloud 203. This may also be done by the external computing device 201.

The water heater 103C controls the temperature of hot water supply. The slave module 102 associated with the water heater 103C collects information such as the temperature of the hot water and sends it to the cloud 203 through the router 202 by way of Wi-Fi connection as the water heater 103C has a steady AC power supply. Instructions, e.g. the switching on and off times of the water heater 103C, may be formulated by the cloud 203 based on the command provided by the user through the mobile device 201. Alternatively, the instructions may be formulated by the mobile device 201 directly based on the temperature collected via the respective slave module 102. Such instructions are sent through the router 202 and by way of Wi-Fi communication to the respective slave module 102 and the slave device 103C. The water heater 103C, under the control of the respective slave module 102, then executes the instructions by adjusting the flames inside the water heater 103C to bring about a change or reduction in the temperature of the hot water.

A ventilation device, such as that in the range hood 103D, controls the flow of air in a specific area. A smart range hood 103D may automatically adjust or maintain the air quality in the specific area when it works in conjunction with the sensor 103B. In a preferred embodiment, the sensor 103B detects, for example, the temperature, gas content or particulates content in the specific area and provides relevant information through the router 202 to the cloud 203 or to the mobile device 201 for analysis. A rise in temperature or particulates content beyond a predetermined threshold may trigger formulation of instructions by the cloud 203. If the instructions are formulated by the mobile device 201, such instructions may be monitored by the cloud 203 before they are sent to the router 202 and then to the slave module 102 associated with the range hood 103D by way of Wi-Fi communication. The range hood 103D is AC powered and as such Wi-Fi communication directly with the router 202 is available. The instructions may involve switching on the range hood 103D to extract exhaust air, residual gas and particulates from the specific area. In a more advanced system, the instructions may include speed control of the ventilation fan in the range hood 103D to achieve a desired level of air flow.

Another possible device is the cooking appliance 103E. The slave module 102 associated with the cooking appliance 103E may be useful in detecting the temperature of the cooking appliance 103E to avoid overheating. The temperature of the cooking appliance 103E may be detected by the associated slave module 102, which may be equipped with a temperature sensor. Such information is sent to the gateway 200 by way of BLE communication and then the router 202 through Wi-Fi and eventually to the cloud 203 for analysis. It is also possible for the analysis to be taken place at the mobile device 201. Instructions may then be formulated by the cloud 203 or the mobile device 201 when the temperature of the cooking appliance 103E exceeds a threshold. Such instructions are sent to the router 202 and then the gateway 200 to the slave module 102 associated with the cooking appliance 103E, which involves turning down or off of the cooking appliance 103E.

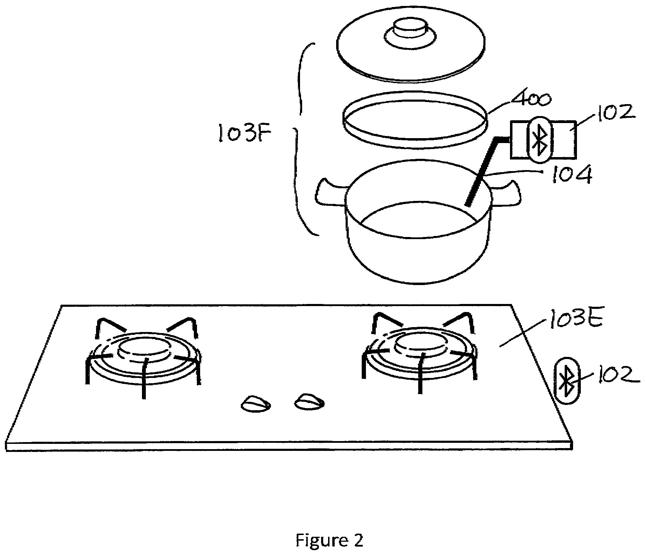

A further device may be a cooking pot 103F as shown in Figure 2. The slave module 102 associated with such a cooking pot 103F may be modified to incorporate a thermistor 104 that measures the temperature of the content in the cooking pot 103F. In the preferred embodiment, the slave module 102 is attached to the cooking pot 103F by means of an attachment device or an adaptor 400 in the form of an attachment ring that is configured to fit on the rim of the cooking pot 103F or attached to the rim of a lid of the cooking pot 103F. The slave module 102 monitors the temperature of the content in the cooking pot 103F by means of the thermistor 104. The information collected is sent to the cloud 203 and/or the mobile device 201 through the gateway 200 or directly from the gateway 200 to the mobile device 201 if they are in proximity where BLE communication is available. When the temperature of the content exceeds a certain predetermined value, instructions may be formulated by the cloud 203 or the mobile device 201. Such instructions are then sent to the slave module 102 associated with the cooking appliance 103E, on which the cooking pot 103F is placed. The instructions may involve turning down or switching off of the cooking appliance 103E.

More specifically, the instructions may be sent from the cloud 203 to the router 202 and then the gateway 200 via the internet and Wi-Fi communication respectively and finally to the slave module 102 and the cooking appliance 103E. Alternatively if the instructions are formulated by the mobile device 201, such instructions may go via the router 202 to the gateway 200 by Wi-Fi, or directly to the gateway 200 through BLE communication, to the slave module 102 and the cooking appliance 103E.

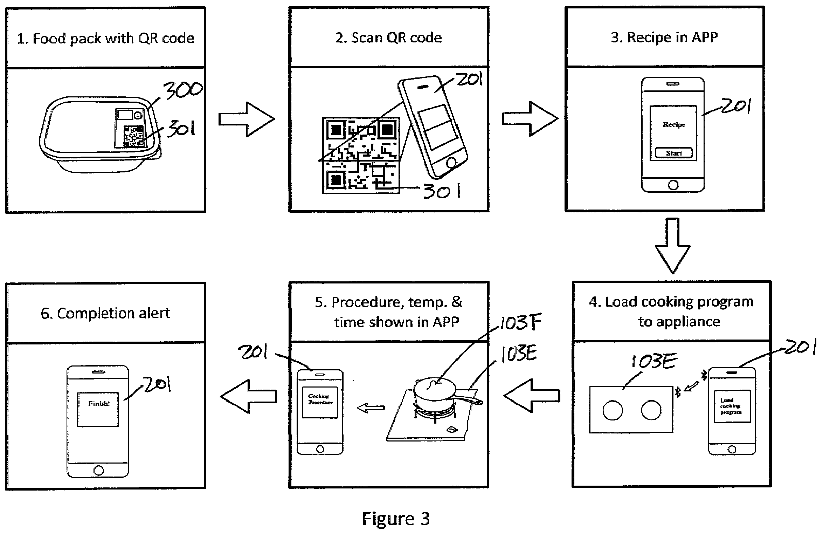

An implementation of the control system 1 is shown in Figure 3. A food package 300 with a barcode or more specifically a QR code 301 is provided. The QR code 301 is readable by the external computing device 201, and allows the user of the external computing device 201 to retrieve data pertaining to the food package 300, such as a cooking recipe or nutrition information. The external computing device 201 is installed with a program or app that enables it to control the master module 101. Instructions from the mobile device 201 would include loading a cooking program that contains e.g. cooking time/temperature settings to the slave module 102 of the relevant cooking appliance 103E via the master and slave modules 101 and 102. Once the cooking program is loaded to the cooking appliance 103E, the cooking procedures or recipe will appear on the display screen of the external computing device 201.

The cooking recipe and cooking procedures may be retrieved from the cloud 203 or be available amongst the preloaded recipes that come along with the program or app installed in the external computing device 201. The cooking procedures or recipe may include information such as amount of seasoning to be added to the food at a specific time. When cooking is completed, an alert will be sent from cooking appliance 103E to the slave module 102 and through the master module 101 to the external computing device 201.

During cooking, it would likely to involve active temperature monitoring of the content in the cooking pot 103F by the thermistor 104 of the slave module 102 associated with the cooking pot 103F. Information in relation to the temperature of the content in the cooking pot 103F is sent through the slave module 102 of the cooking pot 103F to the cloud 203 and the mobile device 201. Instructions formulated based on the information may be provided by the mobile device 201 or the cloud 203 to the slave module 102 of the cooking appliance 103E for controlling the heat of the cooking appliance 103E.

The control system 1 permits full integration of the smart devices 103, together formulating a smart kitchen.

The invention has been given by way of example only, and various other modifications of and/or alterations to the described embodiments may be made by persons skilled in the art without departing from the scope of the invention as specified in the appended claims.

## Claims

1. A control system (1) for use in a smart kitchen including a kitchen device (103), comprising:
a master module (101) having control over a slave module (102) through wireless technology; and
the slave module (102) is configured to associate with the kitchen device (103) and to collect information therefrom, the slave module (102) being in-built with the kitchen device (103);
the master module (101) is configured to exercise remote control over the slave module (102) based on instructions provided to the master module (101) and information collected from the slave module (102);
and, the slave module (102) includes a timer for keeping time when the kitchen device (103) is to perform a function based on instructions from the master module (101), wherein, upon interruption of the remote control from the master module (101), the slave module (102) is configured to maintain the performed function of the kitchen device (103) according to the timer;
**characterized in that**, the master module (101) is in wireless communication with a mobile device (201); and
the smart kitchen is at a location defined by predetermined parameters within which the mobile device (201) is connected to the system via a router of the master module (101) and outside which the mobile device (201) is connected to the system via cloud of the master module (101), an alert is sent to the mobile device (201) when location of the mobile device (201) exceeds the predetermined parameters and after status of the slave device is taken into consideration.

2. The control system (1) as claimed in claim 1, **characterized in that** the master module (101) is adapted to control at least first and second slave modules (102), with information collected from the first slave module (102) useful in formulating instructions for the master module (101) to control the second slave module (102).

3. The control system (1) as claimed in claim 2, **characterized in that** the first and second slave modules (102) are of same physical configuration and are programmable differently.

4. The control system (1) as claimed in any one of claims 1 to 3, **characterized in that** the master module (101) is a wireless integration of an internal network (100A) and an external network (100B).

5. The control system (1) as claimed any one of claims 1 to 4, **characterized in that** the second part of the master module (101) includes a cloud system (203) at which data is analysed and from which data is extractable for formulating instructions to the slave module (102).

6. The control system (1) as claimed in claim 5, **characterized in that** the first part of the master module (101) includes a gateway (200) in wireless communication with the cloud system (203), which can be selectively bypassed to enable establishment of direct wireless connection between the slave module (102) and the cloud system (203).

7. The control system (1) as claimed in claim 6, **characterized in that** at least one of the gateway (200) and the cloud system (203) includes a further timer for keeping time when a relevant kitchen device (103) is to perform a function.

8. The control system (1) as claimed in claim 6 or claim 7, **characterized in that** the gateway (200) is arranged to connect the cloud system (203) to the slave module (102) and to repeat a command from the cloud system (203) for the slave module.

9. The control system (1) as claimed in any one of claims 6 to 8, **characterized in that** the first part of the master module (101) further includes a router (202) that is wirelessly connected with the gateway (200) to form the internal network (100A);
optionally, wherein wireless communication within the internal network (100A) comprises BLE communication or Wi-Fi communication.

10. The control system (1) as claimed in any one of claims 5 to 9, **characterized in that** the cloud system (203) forms part of the external network (100B), which is wirelessly connected to the internal network (100A).

11. The control system (1) as claimed in any one of claims 1 to 10, **characterized in that**
the mobile device (201) comprises a smart phone device; and optionally, wherein the slave module (102) includes a thermistor for detection of temperature in or of the kitchen device (103).

12. The control system (1) as claimed in any one of claims 1 to 11, **characterized in that** the master and slave modules (101 and 102) are communicated through Wi-Fi or BLE technology.

13. The control system (1) as claimed in any one of claims 1 to 12, **characterized in that** the kitchen device (103) comprises a device selected from a group comprising gas meter (103A), sensor (103B), water heater (103C), range hood (103D) and cooking device (103E).

14. The control system (1) as claimed in claim 11, **characterized in that** the control system (1) includes monitoring means for monitoring the distance or location of the mobile device (201) relative to at least one of the gateway (200) and the router (202), and alarm means for providing an alarm signal if the distance, or the location of the computing device is a at distance, that exceeds a threshold value;
optionally, wherein the alarm means is provided at the mobile device (201).

15. The control system (1) as claimed in any one of claims 1 to 14, **characterized in that** the master module (101) is connected to the slave modules (102) through a connection which is monitored periodically and an alarm is triggered in response to breakage of the connection.

## Patentansprüche

1. Steuerungssystem (1) zur Verwendung in einer intelligenten Küche, einschließend eine Küchenvorrichtung (103), umfassend:
ein Master-Modul (101), das ein Slave-Modul (102) durch drahtlose Technologie steuert; und
das Slave-Modul (102) ist dafür konfiguriert, sich mit der Küchenvorrichtung (103) zu verknüpfen und von dieser Informationen zu sammeln, wobei das Slave-Modul (102) in der Küchenvorrichtung (103) eingebaut ist;
das Master-Modul (101) ist dafür konfiguriert, eine Fernsteuerung über das Slave-Modul (102) basierend auf dem Master-Modul (101) bereitgestellten Anweisungen und von dem Slave-Modul (102) gesammelten Informationen auszuführen;
und, das Slave-Modul (102) einen Timer einschließt, um die Zeit zu verfolgen, wenn die Küchenvorrichtung (103) eine Funktion basierend auf Anweisungen von dem Master-Modul (101) ausführen soll, wobei bei Unterbrechung der Fernsteuerung von dem Master-Modul (101) das Slave-Modul (102) dafür konfiguriert ist, die ausgeführte Funktion der Küchenvorrichtung (103) gemäß dem Timer beizubehalten;
**dadurch gekennzeichnet, dass** das Master-Modul (101) in drahtloser Kommunikation mit einer mobilen Vorrichtung (201) steht; und
sich die intelligente Küche an einer Stelle befindet, die durch vorbestimmte Parameter definiert ist, innerhalb derer die mobile Vorrichtung (201) über einen Router des Master-Moduls (101) mit dem System verbunden ist und außerhalb derer die mobile Vorrichtung (201) über die Cloud des Master-Moduls (101) mit dem System verbunden ist, eine Warnung an die mobile Vorrichtung (201) gesendet wird, wenn die Stelle der mobilen Vorrichtung (201) die vorbestimmten Parameter verlässt und nachdem der Status der Slave-Vorrichtung berücksichtigt worden ist.

2. Steuerungssystem (1) nach Anspruch 1, **dadurch gekennzeichnet, dass** das Master-Modul (101) dazu geeignet ist, mindestens ein erstes und ein zweites Slave-Modul (102) mit Informationen zu steuern, die von dem ersten Slave-Modul (102) gesammelt wurden, die zur Formulierung von Anweisungen für das Master-Modul (101) nützlich sind, um das zweite Slave-Modul (102) zu steuern.

3. Steuerungssystem (1) nach Anspruch 2, **dadurch gekennzeichnet, dass** das erste und das zweite Slave-Modul (102) die gleiche physische Konfiguration aufweisen und unterschiedlich programmierbar sind.

4. Steuerungssystem (1) nach einem der Ansprüche 1 bis 3, **dadurch gekennzeichnet, dass** das Master-Modul (101) eine drahtlose Integration eines internen Netzes (100A) und eines externen Netzes (100B) ist.

5. Steuerungssystem (1) nach einem der Ansprüche 1 bis 4, **dadurch gekennzeichnet, dass** der zweite Teil des Master-Moduls (101) ein Cloud-System (203) einschließt, bei dem Daten analysiert werden und von welchem Daten extrahierbar sind, um Anweisungen für das Slave-Modul (102) zu formulieren.

6. Steuerungssystem (1) nach Anspruch 5, **dadurch gekennzeichnet, dass** der erste Teil des Master-Moduls (101) einen Netzübergang (200) in drahtloser Kommunikation mit dem Cloud-System (203) einschließt, welcher gezielt umgangen werden kann, um das Einrichten einer direkten drahtlosen Verbindung zwischen dem Slave-Modul (102) und dem Cloud-System (203) zu ermöglichen.

7. Steuerungssystem (1) nach Anspruch 6, **dadurch gekennzeichnet, dass** mindestens eines von dem Netzübergang (200) und dem Cloud-System (203) einen weiteren Timer einschließt, um die Zeit zu verfolgen, wenn eine relevante Küchenvorrichtung (103) eine Funktion ausführen soll.

8. Steuerungssystem (1) nach Anspruch 6 oder Anspruch 7, **dadurch gekennzeichnet, dass** der Netzübergang (200) so angeordnet ist, dass er das Cloud-System (203) mit dem Slave-Modul (102) verbindet und einen Befehl von dem Cloud-System (203) für das Slave-Modul wiederholt.

9. Steuerungssystem (1) nach einem der Ansprüche 6 bis 8, **dadurch gekennzeichnet, dass** der erste Teil des Master-Moduls (101) ferner einen Router (202) einschließt, der drahtlos mit dem Netzübergang (200) verbunden ist, um das interne Netz (100A) zu bilden;
wahlweise wobei die drahtlose Kommunikation innerhalb des internen Netzes (100A) eine BLE-Kommunikation oder eine Wi-Fi-Kommunikation umfasst.

10. Steuerungssystem (1) nach einem der Ansprüche 5 bis 9, **dadurch gekennzeichnet, dass** das Cloud-System (203) Teil des externen Netzes (100B) bildet, welches drahtlos mit dem internen Netz (100A) verbunden ist.

11. Steuerungssystem (1) nach einem der Ansprüche 1 bis 10, **dadurch gekennzeichnet, dass**
die mobile Vorrichtung (201) eine Smartphone-Vorrichtung umfasst; und wahlweise wobei das Slave-Modul (102) einen Thermistor zum Erkennen einer Temperatur in oder von der Küchenvorrichtung (103) einschließt.

12. Steuerungssystem (1) nach einem der Ansprüche 1 bis 11, **dadurch gekennzeichnet, dass** das Master- und das Slave-Modul (101 und 102) durch eine Wi-Fi- oder BLE-Technologie verbunden sind.

13. Steuerungssystem (1) nach einem der Ansprüche 1 bis 12, **dadurch gekennzeichnet, dass** die Küchenvorrichtung (103) eine Vorrichtung umfasst, die aus einer Gruppe ausgewählt ist, die einen Gasmesser (103A), einen Sensor (103B), einen Warmwasserbereiter (103C), eine Dunstabzugshaube (103D) und eine Kochvorrichtung (103E) umfasst.

14. Steuerungssystem (1) nach Anspruch 11, **dadurch gekennzeichnet, dass** das Steuerungssystem (1) Überwachungsmittel zum Überwachen des Abstands oder der Position der mobilen Vorrichtung (201) relativ zu mindestens einem von dem Netzübergang (200) und dem Router (202) und Alarmmittel zum Bereitstellen eines Alarmsignals, sofern der Abstand oder die Position der Rechenvorrichtung sich in einem Abstand befindet, der einen Schwellenwert übersteigt, einschließt;
wahlweise wobei die Alarmmittel an der mobilen Vorrichtung (201) vorgesehen sind.

15. Steuerungssystem (1) nach einem der Ansprüche 1 bis 14, **dadurch gekennzeichnet, dass** das Master-Modul (101) mit den Slave-Modulen (102) durch eine Verbindung verbunden ist, die periodisch überwacht wird, und ein Alarm als Reaktion auf eine Unterbrechung der Verbindung ausgelöst wird.

## Revendications

1. Système de commande (1) pour utilisation dans une cuisine intelligente incluant un dispositif de cuisine (103), comprenant :
un module maître (101) qui commande un module esclave (102) à travers une technologie sans fil ; et
le module esclave (102) est configuré pour s'associer au dispositif de cuisine (103) et pour collecter des informations à partir de celui-ci, le module esclave (102) étant intégré au dispositif de cuisine (103) ;
le module maître (101) est configuré pour exercer une commande à distance sur le module esclave (102) sur la base d'instructions fournies au module maître (101) et d'informations collectées à partir du module esclave (102) ;
et, le module esclave (102) inclut un minuteur permettant de chronométrer le temps lorsque le dispositif de cuisine (103) doit effectuer une fonction sur la base d'instructions provenant du module maître (101), dans lequel, lors de l'interruption de la commande à distance depuis le module maître (101), le module esclave (102) est configuré pour maintenir la fonction réalisée du dispositif de cuisine (103) selon le minuteur ;
**caractérisé en ce que** le module maître (101) est en communication sans fil avec un dispositif mobile (201) ; et
la cuisine intelligente est à un endroit défini par des paramètres prédéterminés dans lesquels le dispositif mobile (201) est connecté au système par le biais d'un routeur du module maître (101) et hors duquel le dispositif mobile (201) est connecté au système via le Cloud du module maître (101), une alerte est envoyée au dispositif mobile (201) lorsque l'emplacement du dispositif mobile (201) dépasse les paramètres prédéterminés et après la prise en compte de l'état du dispositif esclave.

2. Système de commande (1) selon la revendication 1, **caractérisé en ce que** le module maître (101) est adapté pour commander au moins des premier et second modules esclave (102), avec des informations collectées auprès du premier module esclave (102), utiles dans la formulation d'instructions pour que le module maître (101) commande le second module esclave (102).

3. Système de commande (1) selon la revendication 2, **caractérisé en ce que** les premier et second modules esclave (102) sont de même configuration physique et sont programmables différemment.

4. Système de commande (1) selon l'une quelconque des revendications 1 à 3, **caractérisé en ce que** le module maître (101) est une intégration sans fil d'un réseau interne (100A) et d'un réseau externe (100B).

5. Système de commande (1) selon l'une quelconque des revendications 1 à 4, **caractérisé en ce que** la seconde partie du module maître (101) inclut un système Cloud (203) auquel des données sont analysées et à partir duquel des données peuvent être extraites pour formuler des instructions au module esclave (102).

6. Système de commande (1) selon la revendication 5, **caractérisé en ce que** la première partie du module maître (101) inclut une passerelle (200) en communication sans fil avec le système Cloud (203), qui peut être sélectivement contourné pour permettre l'établissement d'une connexion sans fil directe entre le module esclave (102) et le système Cloud (203).

7. Système de commande (1) selon la revendication 6, **caractérisé en ce qu'**au moins l'une parmi la passerelle (200) et le système Cloud (203) inclut un minuteur supplémentaire permettant de chronométrer le temps lorsqu'un dispositif de cuisine pertinent (103) doit effectuer une fonction.

8. Système de commande (1) selon la revendication 6 ou la revendication 7, **caractérisé en ce que** la passerelle (200) est agencée pour connecter le système Cloud (203) au module esclave (102) et pour répéter une commande provenant du système Cloud (203) pour le module esclave.

9. Système de commande (1) selon l'une quelconque des revendications 6 à 8, **caractérisé en ce que** la première partie du module maître (101) inclut en outre un routeur (202) qui est connecté sans fil à la passerelle (200) pour former le réseau interne (100A) ;
facultativement, dans lequel la communication sans fil dans le réseau interne (100A) comprend une communication BLE ou une communication Wi-Fi.

10. Système de commande (1) selon l'une quelconque des revendications 5 à 9, **caractérisé en ce que** le système Cloud (203) fait partie du réseau extérieur (100B), qui est connecté sans fil au réseau interne (100A).

11. Système de commande (1) selon l'une quelconque des revendications 1 à 10, **caractérisé en ce que**
le dispositif mobile (201) comprend un dispositif smartphone ; et facultativement dans lequel le module esclave (102) inclut une thermistance permettant de détecter une température du dispositif de cuisine (103) ou à l'intérieur de celui-ci.

12. Système de commande (1) selon l'une quelconque des revendications 1 à 11, **caractérisé en ce que** les modules maître et esclave (101 et 102) communiquent par le biais d'une technologie Wi-Fi ou BLE.

13. Système de commande (1) selon l'une quelconque des revendications 1 à 12, **caractérisé en ce que** le dispositif de cuisine (103) comprend un dispositif sélectionné dans un groupe comprenant un compteur de gaz (103A), un capteur (103B), un chauffeeau (103C), une hotte (103D) et un dispositif de cuisson (103E).

14. Système de commande (1) selon la revendication 11, **caractérisé en ce que** le système de commande (1) inclut des moyens de contrôle permettant de surveiller la distance ou l'emplacement du dispositif mobile (201) par rapport à au moins l'un parmi la passerelle (200) et le routeur (202), et des moyens d'alarme permettant de fournir un signal d'alarme si la distance ou l'emplacement du dispositif de calcul est à une distance, qui dépasse une valeur seuil ;
facultativement, dans lequel les moyens d'alarme sont fournis au niveau du dispositif mobile (201).

15. Système de commande (1) selon l'une quelconque des revendications 1 à 14, **caractérisé en ce que** le module maître (101) est connecté aux modules esclaves (102) par une connexion qui est surveillée périodiquement et une alarme est déclenchée en réponse à une rupture de la connexion.
